# EUROPEAN PATENT APPLICATION

(11) **EP 4 336 256 A1**
(43) Date of publication of application: **13.03.2024**
(21) Application number: 23163760.4
(22) Date of filing: 23.03.2023
(51) Int. Cl.: G03B 21/20, G02B 26/00, H04N 9/31

(54) **OPTICAL ASSEMBLY AND PROJECTION DEVICES USING THE SAME**

(30) Priority: 07.09.2022 CN 202222371129 U
(71) Applicant: Hong Fu Tai Precision Electrons (Yantai) Co., Ltd, Yantai (CN); Hon Hai Precision Industry Co., Ltd., New Taipei City (TW)
(72) Inventor: HUANG, SHI-KAI, New Taipei (TW)
(74) Representative: Zaboliene, Reda

(57) **Abstract**

An optical assembly (1) and projection device (2) using the same. The optical assembly (1) is configured for converting light defined by a light path (22). A color wheel (10) includes at least two color circles (101), the at least two color circles (101) are arranged concentrically and each includes a plurality of color zones (102). A first drive assembly (11) connect to the color wheel (10), the first drive assembly (11) is configured for driving the color wheel (10) to rotate, and the plurality of color zones (102) of each of the at least two color circles (101) are illuminated by the light in the light path (22). A second drive assembly (12) connect to the first drive assembly (11), the second drive assembly (12) is configured for driving the color wheel (10) in a first direction (X).

## Description

### TECHNICAL FIELD

The subject matter relates to optical display, and in particular, to an optical assembly and projection device using the same.

### BACKGROUND

Projection devices have the advantages of a wide color gamut and high color purity. Light emitted from the light source is reflected by a micro-reflector element and then passes through color wheels to convert into different colors. Depending on the application scenario, the color rendering of the projector has different requirements. For example, in a graphic presentation, the projector needs to have a high brightness on the display, but not a high color on the display. In another example, when the projector is used in home theater, it needs to make its display screen have good color performance. Therefore, the color wheel has different requirements for different application scenarios. However, improvements in the applicability and the performance of the color wheels are limited by the size, the manufacturing cost and other factors of the color wheels.

### SUMMARY

The purpose of the invention is to provide pickup, string instrument and pickup control method. So as to solve the problem of simple control function caused by control through knobs in the prior art, so as to enrich the playing experience.

An optical assembly configured for converting light defined by a light path, the optical assembly comprising:
a color wheel comprising at least two color circles, wherein the at least two color circles are arranged concentrically and each comprises a plurality of color zones;
a first drive assembly connected to the color wheel, wherein the first drive assembly is configured for driving the color wheel to rotate, and the plurality of color zones of each of the at least two color circles are illuminated by the light in the light path;
a second drive assembly connected to the first drive assembly, wherein the second drive assembly is configured for driving the color wheel in a first direction, and each of the at least two color circles is illuminated a light beam defined by the light path, the first direction intersects with a directional extension of the light path.

Furthermore, the at least two color circles are stacked on top of each other, centers of circles of the plurality of color circles overlap with a projection of a rotation plane of the color wheel.

Furthermore, each of the at least two color circles has a radius that is different from the other color circles, and the at least two color circles are stacked on top of each other in an order from small to large or from large to small according to the radius.

Furthermore, each of the at least two color circles is circular, and the at least two color circles are provided in an order from small to large according to the radius, each of the at least two color circled comprises a substrate and a light conversion layer arranged on the surface of the substrate, the light conversion layer is configured to convert light.

Furthermore, the substrates of adjacent two of the at least two color circles are bonded together.

Furthermore, all the substrate of the at least two color circles are formed together as one piece.

Furthermore, the first direction is perpendicular to the directional extension of the light path.

Furthermore, the first drive assembly comprises a rotating drive member and a rotational speed sensing member, the rotating drive member comprises a fixed portion and a rotating portion, the rotating portion is rotatable relative to the fixed portion, the rotating portion is coupled to the at least two color wheels for driving the color wheel, the fixed portion is coupled to the second drive assembly, the rotational speed sensing member is connected to the fixed portion, a sensing end of the rotational speed sensing member faces the color wheel and senses a rotational speed of the color wheel.

Furthermore, the second drive assembly comprises a linear drive member and an adapter plate, the adapter plate is fixedly connected to the first drive assembly, the linear drive member is connected to the adapter plate, the linear drive member drives the color wheel in a reciprocating linear motion in the first direction through the adapter plate and the first drive assembly.

Furthermore, the linear drive member comprises a stepper motor, a drive screw, a transmission nut and a transmission plate, the transmission plate is fixedly connected to the adapter plate, the stepper motor is connected to the drive screw, the transmission nut is snapped on the drive screw and connected to the drive screw, the transmission nut is fixed to the transmission plate, the stepper motor is configured for driving the drive screw to rotate, so that the transmission nut drives the transmission plate to make linear motions relative to the stepper motor.

Furthermore, the second drive assembly further comprises a guide rod and a base, the stepper motor is fixedly connected to the base, the guide rod is fixedly connected to the base, the guide rod is slidingly connected to the transmission plate for guiding the transmission plate.

Furthermore, the transmission plate comprises a first sub plate and a second sub plate at intervals, the first sub plate is fixed to the transmission nut, the first sub plate slidingly is connected to the guide rod, the second sub plate is slidingly connected to the guide rod, the first sub plate and the second sub plate are fixed to the adapter plate away from the color wheel side.

Furthermore, the second drive assembly further comprises a linear displacement sensing member and a measuring nut, the measuring nut and the drive screw are arranged at intervals, the measuring nut and the transmission nut are moved synchronously with respect to the drive screw, the linear displacement sensing member is cooperated with the measuring nut for obtaining the displacement of the transmission nut along the first direction by sensing the displacement of the measuring nut along the first direction.

Furthermore, the second drive assembly further comprises a buffer member, the buffer member is positioned between the adapter plate and the first drive assembly.

A projection device comprises a light source and an optical assembly, the light source emit light beams in a light path, the optical assembly is configured for cooperating with the light path for converting the light beam.

The first drive assembly drives the color wheel to rotate. The first drive assembly is coordinated with the second drive assembly to drive the color wheel to move into the light path along the first direction. So that each color circle and each color area in each color circle can be illuminated a light beam defined by the light path in a time division. The optical assembly can be applied to the projection device, and the projection device has higher adaptability and better performance.

### BRIEF DESCRIPTION OF DRAWINGS

FIG. 1 is a schematic view of an optical assembly according to the present disclosure.
FIG. 2 is another schematic view of the optical assembly shown in FIG. 1 according to the present disclosure.
FIG. 3 is an exploded schematic view of the optical assembly shown in FIG. 1 according to the present disclosure.
FIG. 4 is a schematic view of a first embodiment of the color wheel of the optical assembly according to the present disclosure.
FIG. 5 is a schematic view of a second embodiment of the color wheel of the optical assembly according to the present disclosure.
FIG. 6 is a schematic view of third embodiment of the color wheel of the optical assembly according to the present disclosure.
FIG. 7 is a partial schematic view of the optical assembly according to the present disclosure.
FIG. 8 is a partial schematic view of the optical assembly according to the present disclosure.
FIG. 9 is a partial schematic view of the optical assembly according to the present disclosure.
FIG. 10 is a schematic view of the projection device according to the present disclosure.

### DETAILED DESCRIPTION OF EMBODIMENTS

The following descriptions refer to the attached drawings for a more comprehensive description of this application. Sample embodiments of this application are shown in the attached drawings. However, this application can be implemented in many different forms and should not be construed as limited to exemplary embodiments set forth herein. These exemplary embodiments are provided to make this application thorough and complete, and to adequately communicate the scope of this application to those skilled in the field. Similar view labels represent the same or similar components.

The terms used herein are intended only to describe the purpose of particular exemplary embodiments and are not intended to limit this application. As used herein, the singular forms "one", "one" and "the" are intended to include the plural as well, unless the context otherwise clearly indicates it. In addition, when used herein, the words "include" and/or "include" and/or "have", integers, steps, operations and/or components, do not exclude additional or pluralities of features, regions, integers, steps, operations, components, and/or groups thereof.

Unless otherwise defined, all terms used herein (including technical and scientific terms) have the same meaning as would normally be understood by ordinary technicians in the field of this application. In addition, unless expressly defined in the context, terms such as those defined in a general dictionary shall be construed to have meanings consistent with those in the relevant technology and in the content of this application, and shall not be construed to have idealistic or overly formal meanings.

Examples of embodiments are described below in combination with the attached drawings. It should be noted that the components depicted in the attached drawings may be shown not to scale; the same or similar components will be assigned the same or similar drawing mark representation or similar technical terms.

The following is a detailed description of the specific implementation of this application, referring to the attached drawings.

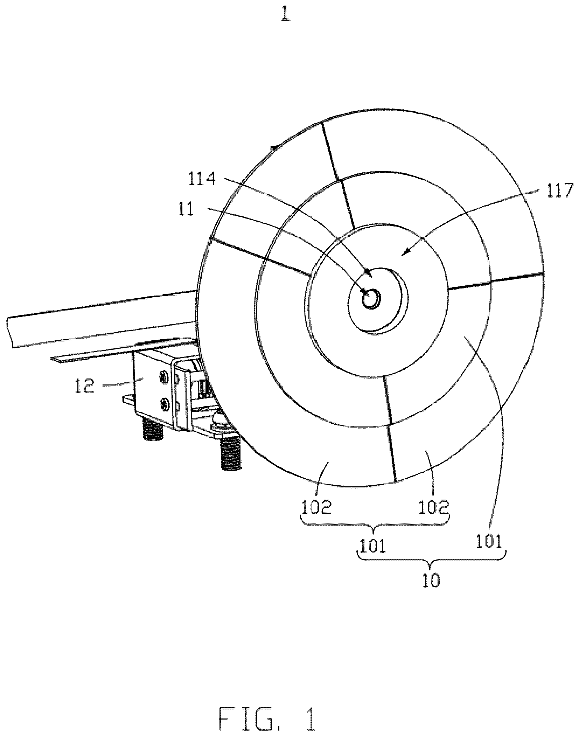

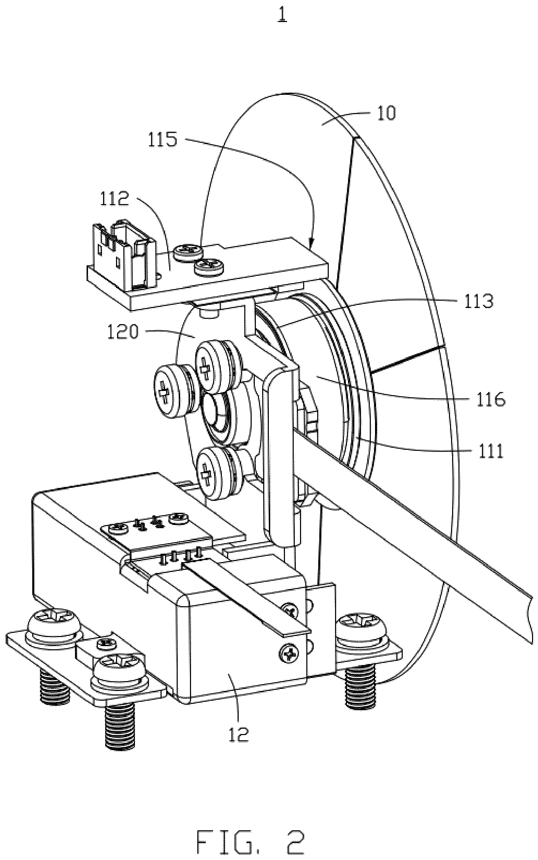

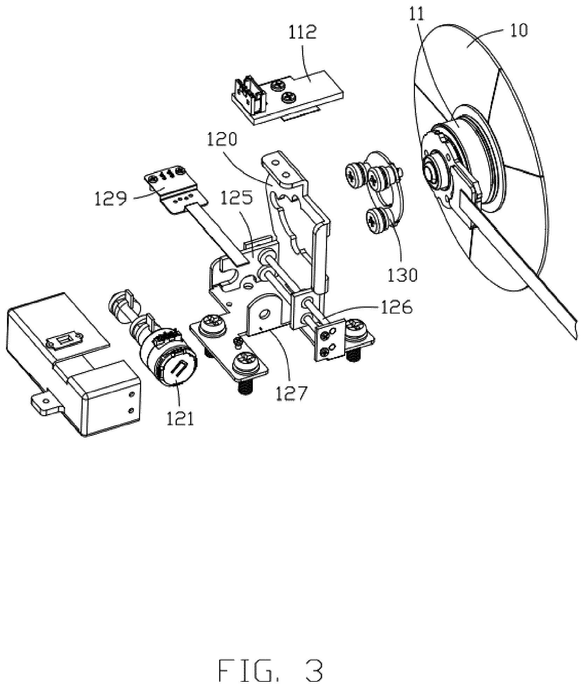

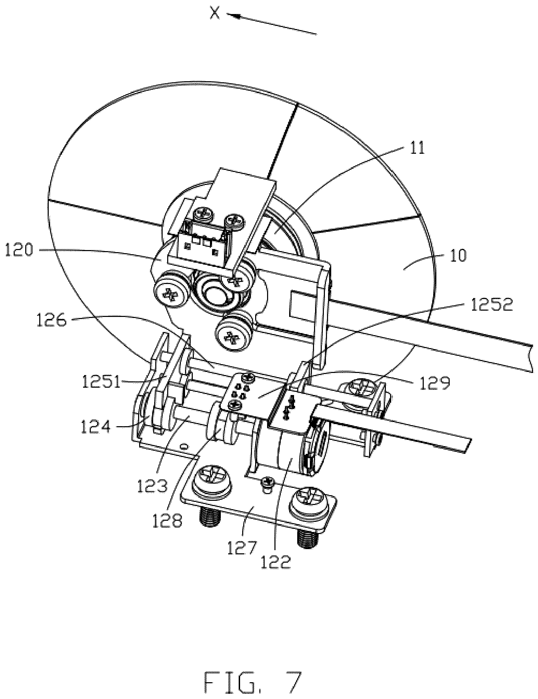

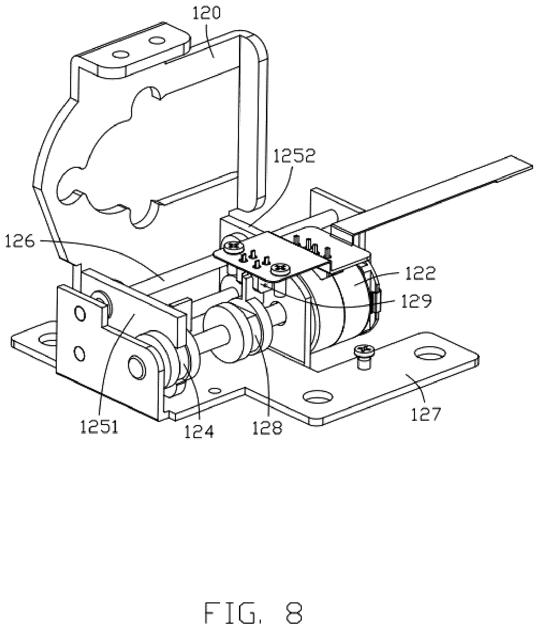

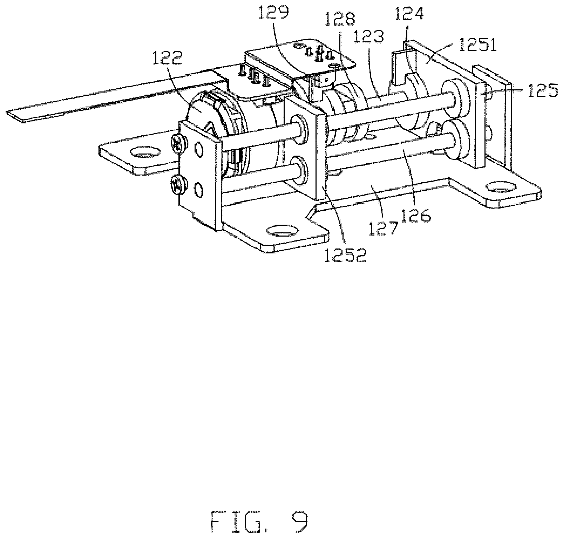

As shown in FIG. 1 to FIG. 10, The subject matter relates to an optical assembly and a projection device using the same. The optical assembly 1 is cooperated with an light path 22 for converting light. The optical assembly 1 includes a color wheel 10, a first drive assembly 11 and a second drive assembly 12. The color wheel 10 includes at least two concentrically disposed color circles 101. The color circles 101 include a plurality of color zones 102. The first drive assembly 11 is connected to the color wheel 10. The first drive assembly 11 drives the color wheel 10. The first drive assembly 11 is used to drive the color wheel 10 to rotate so that the different color zones 102 of the color circle 101 intervene in the light path 22 in a time-sharing manner. The second drive assembly 12 is connected to the first drive assembly 11. The second drive assembly 12 drives the color circle 101 to move through the first drive assembly 11. The second drive assembly 12 is used to drive the color wheel 10 to move in a first direction X, so that multiple concentrically color circles 101 are illuminated a light beam defined by the light path 22 in a time division. The first direction X intersects with the extension direction of the light path 22.

Among them, "multiple concentrically color circle 101" means a plurality of color circles 101 where the centers 107 are coaxially arranged or overlapped. The axis direction of the coaxially arranged centers 107 can be the extension direction of the light path 22. The centers 107 corresponding to the circles of multiple color circles 101 overlap in the upper projection of the rotation plane A. The circles in which multiple color circles 101 are located can correspond to different circles (in this case, the centers 107 corresponding to multiple color circles 101 are arranged coaxially). And multiple color circles 101 can correspond to the same circle (in this case, the centers 107 of multiple color circles 101 overlap).

The first drive assembly 11 drives the color wheel 10 to rotate. The first drive assembly 11 is coordinated with the second drive assembly 12 to drive the color wheel 10 to move into the light path 22 along the first direction X. So that each color circle 101 and each color area 102 in each color circle 101 can be illuminated a light beam defined by the light path 22 in a time division. The optical assembly 1 can be applied to the projection device 2, and the projection device 2 has higher adaptability and better performance.

The color wheel 10 can change the brightness or color of the light. For example, the color wheel 10 include a transparent substrate and a filter layer or fluorescent layer, the filter layer and the fluorescent layer is arranged on the surface of the transparent substrate. Or the color wheel 10 include a non-transparent substrate. The first drive assembly 11 is used for outputting rotational torque. For example, the first drive assembly 11 is rotary motor. The second drive assembly 12 is used for outputting linear motion. For example, the second drive assembly 12 is linear motor, or the second drive assembly 12 is stepper motor with a screw.

The color wheel 10 includes at least two circles of concentrically set color circle 101. The number of color circles 101 can also be three, four, five, and greater than five circles. The number of color circles 101 is expanded according to the information flow when the projection device 2. The color wheel 10 has a greater variety of permutations and combinations in outputting the picture to obtain a picture with richer color and/or brightness.

The first direction X is perpendicular to the directional extension of the light path 22. The light path 22 is perpendicular to the rotation plane A of the color wheel 10.

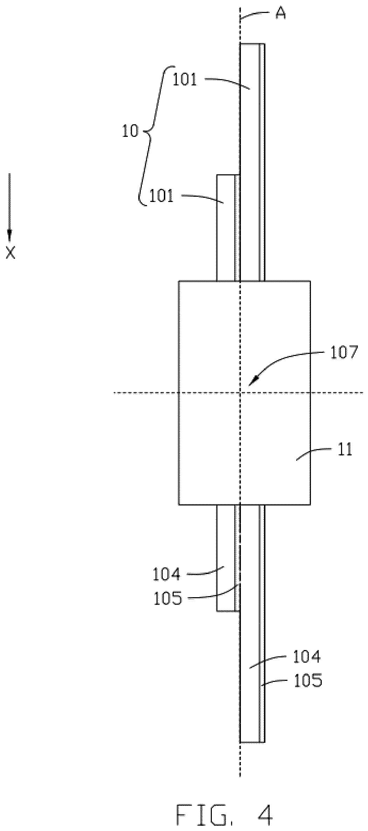

As shown in FIG. 4, a plurality of color circles 101 are stacked on top of each other. The centers 107 of the plurality of color circles 101 overlap along the projection of the rotation plane A. The plurality of color circles 101 are correspond to different circles (in this case, the centers 107 of the plurality of color circles 101 are arranged coaxially).

In one embodiment, the radius of multiple color circles 101 is not the same. And multiple color circles 101 are stacked on top of each other order from small to large or from large to small according to the radius.

In this embodiment, a plurality of color circles 101 are stacked on top of each other in the direction of the vertical rotation plane A. The inner radius of the plurality of color circles 101 is the same and the outer radius is different.

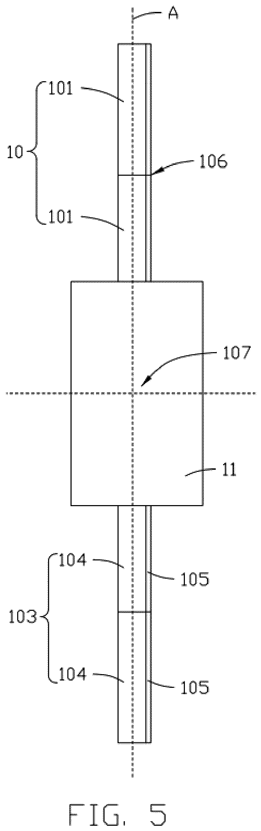

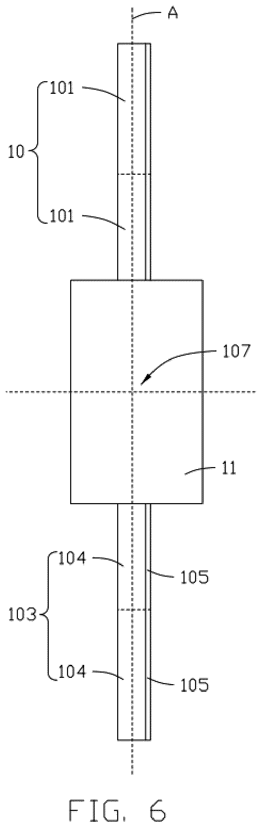

As shown in FIG. 5 and FIG. 6, the plurality of color circles 101 are provided in order of their outer radius from small to large. The plurality of color circles 101 may correspond to the same circle (in this case, the center 107 of the circle corresponding to the plurality of color circles 101 overlap).

In this embodiment, the plurality of color circles 101 are provided around in the direction of parallel rotation plane A. The inner circle radius of the outer color circle 101 is larger than the outer circle radius of the inner color circle 101.

As shown in FIG. 5, the color circle 101 includes a substrate 104 and a light conversion layer 105 arranged on the surface of the substrate 104. The light conversion layer 105 is used to convert light. The substrate 104 of two adjacent color circles 101 is bonded. The two adjacent substrates 104 of the color circle 101 can be bonded by optical adhesive 106. A plurality of substrates 104 are sequentially spliced to form a main plate 103.

As shown in FIG. 6, the color circle 101 includes a substrate 104 and a light conversion layer 105 arranged on the surface of the substrate 104. The light conversion layer 105 is used to convert light. All the substrate 104 of the at least two color circles 101 are formed together as one piece. In other words, the color wheel 10 includes a main plate 103, by the surface of the main plate 103 corresponding to the position of different color circle 101 and even color zone 102 plated with different light conversion layer 105 to form the color wheel 10. All the color circles 101 share one main plate 103.

Further, the color wheel 10 in each embodiment of the present application can be set according to the product's demand for color and brightness with multiple color circles 101. Each color circle 101 can be divided into multiple color zones 102. The shape of each color zone 102, the geometric combination of multiple color zones 102, and the material or performance of each light conversion layer 105 can be changed according to actual demand.

In one embodiment, the first drive assembly 11 includes a rotating drive member 111 and a rotational speed sensing member 112. The rotating drive member 111 includes a fixed portion 113 and a rotating portion 114. The rotating portion 114 rotates relative to the fixed portion 113. The rotating portion 114 is connected to the color wheel 10 for driving the color wheel 10. The fixed portion 113 is connected to the second drive assembly 12. The rotational speed sensing member 112 is connected to the fixed portion 113. The sensing end 115 of the rotational speed sensing member 112 is oriented toward the color wheel 10 for sensing the speed of the color wheel 10.

In this embodiment, the rotating drive member 111 is rotary motor. The fixed portion 113 includes a housing 116 of the rotating motor and a stator structure (not shown, the stator structure may include a solenoid coil) inside the housing. The rotating portion 114 includes a kinematic assembly(not shown, the rotating motor may include magnetic or magnetic conductive parts) of the rotating motor and a turntable 117 is connected to the rotating motor. The turntable 117 is connected to the rotating motor by transmission. The stator structure cooperates with the rotating motor to rotate the rotating motor to drive the color wheel 10 through the turntable 117.

In this embodiment, the rotational speed sensing member 112 is tachometer sensor. The type of tachometer sensor comprises magnetic tachometer sensors and laser tachometer sensors. The rotational speed sensing member 112 is connected to the housing 116. The sensing end 115 of the rotational speed sensing member 112 is positioned toward the color wheel 10. The rotational speed sensing member 112 measures the rotational speed of the color wheel 10.

In one embodiment, the second drive assembly 12 includes a linear drive member 121 and an adapter plate 120. The adapter plate 120 is fixedly connected to the first drive assembly 11. The linear drive member 121 is connected to the adapter plate 120. The linear drive member 121 drives the color wheel 10 in a reciprocal linear motion in the first direction X. The linear drive member 121 drives the color wheel 10 by the adapter plate 120 and the first drive assembly 11.

Further, the adapter plate 120 is fixedly connected to the fixed portion 113 by nut. The adapter plate 120 is positioned on the side of the fixed portion 113 away from the turntable 117. The second drive assembly 12 can be positioned on the side of the adapter plate 120 away from the first drive assembly 11. Avoid the interference of the first drive assembly 11 and the second drive assembly 12 on the color wheel 10.

In one embodiment, the linear drive member 121 includes a stepper motor 122, a drive screw 123, a transmission nut 124 and a transmission plate 125. The transmission plate 125 is connected to the adapter plate 120. The stepper motor 122 is connected to the drive screw 123. The transmission nut 124 is provided on the drive screw 123 and is connected to the drive screw 123. The transmission nut 124 is fixed to the transmission plate 125. The stepper motor 122 is used to rotate the drive screw 123 so that the transmission nut 124 drives the transmission plate 125 in a linear motion relative to the stepper motor 122.

Further, the stepper motor 122 outputs a rotational torque to rotate the drive screw 123. The drive screw 123 is provided with external threads (not shown) on the outer surface of the drive screw 123. The transmission nut 124 is provided on the external surface of the drive screw 123. The drive screw 123 is provided with internal threads (not shown) that match the external threads. The external threads move relative to the internal threads to convert the rotational torque output by the stepper motor 122 into linear motion in the first direction X. The transmission plate 125 is connected to the transmission nut 124. The transmission nut 124 drives the transmission plate 125 in a linear motion along the first direction X. The transmission plate 125 is provided between the drive screw 123 and the adapter plate 120. The transmission plate 125 drives the adapter plate 120 in a linear motion in the first direction X. Thus, the linear drive member 121 can drive the first drive assembly 11 and the color wheel 10 in the first direction X in a linear motion by the adapter plate 120.

In one embodiment, the second drive assembly 12 further includes a guide rod 126 and a base 127. The guide rod 126 is connected to the base 127. The guide rod 126 is connected to the transmission plate 125 for guiding the transmission plate 125.

Further, the stepper motor 122 is fixed to the base 127 to output a stable linear motion. The guide rod 126 is connected to the base 127. The guide rod 126 and the drive screw 123 may be positioned in parallel. The transmission plate 125 is positioned on the guide rod 126. The transmission plate 125 is guided by the guide rod 126 to improve the movement accuracy of the color wheel 10.

In one embodiment, the transmission plate 125 includes a first sub plate 1251 and a second drive sub plate 1252 at intervals. Both the first sub plate 1251 and the second drive sub plate 1252 are spaced apart from the base 127. The first sub plate 1251 is secured to the transmission nut 124. The first sub plate 1251 is connected to the guide rod 126. The second drive sub plate 1252 is connected to the guide rod 126. The first sub plate 1251 and the second sub plate 1252 are fixed to the side of the adapter plate 120 away from the color wheel 10.

Further, the first sub plate 1251 and the second drive sub plate 1252 arranged at intervals along the first direction X, so that the transmission plate 125 is evenly stressed. The transmission plate 125 is less likely to shake or tilt during the movement and enhance the smoothness of the movement. The first sub plate 1251 is used to drive the adapter plate 120 along the first direction X. The second sub plate 1252 is used to guide the transmission plate 125 in cooperation with the guide rod 126.

In one embodiment, the second drive assembly 12 further includes a linear displacement sensing member 129 and a measuring nut 128. The measuring nut 128 and the drive screw 123 are arranged at intervals. The measuring nut 128 and the transmission nut 124 move synchronously with respect to the drive screw 123. The linear displacement sensing member 129 cooperates with the measuring nut 128 to obtain the displacement of the transmission nut 124 along the first direction X by sensing the displacement of the measuring nut 128 along the first direction X.

Further, the measuring nut 128 is provided over the drive screw 123. The measuring nut 128 and the drive screw 123 are arranged at intervals. The internal threads of the measuring nut 128 and the internal threads of the transmission nut 124 are identical in each parameter. The measuring nut 128 and the transmission nut 124 may move synchronously with respect to the drive screw 123. The linear displacement sensing member 129 may be a proximity sensor, a displacement sensor or a distance sensor. The linear displacement sensing member 129 is electrically connected to the stepper motor 122 by a flexible circuit board (not shown). The linear displacement sensing member 129 mates with the measuring nut 128 and senses its displacement distance. The measuring nut 128 moves synchronously with the transmission nut 124. The transmission nut 124 drives the transmission plate 125, the adapter plate 120 and the color wheel 10 to move synchronously with the measuring nut 128. The linear displacement sensing member 129 can obtain the movement parameters of the color wheel 10 along the first direction X.

In one embodiment, the second drive assembly 12 further includes a buffer member 130. The buffer member 130 is provided between the adapter plate 120 and the first drive assembly 11. In this embodiment, the buffer member 130 is rubber ring.

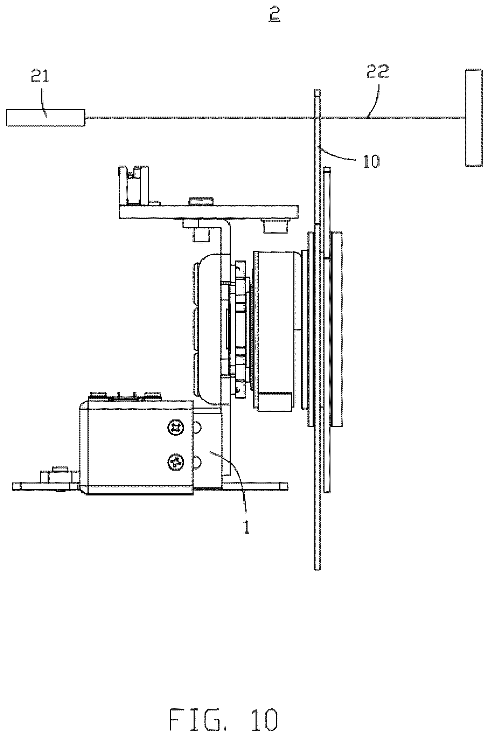

As shown in FIG. 10, the projection device 2 includes a light source 21 and the optical assembly 1. The light source 21 is used to emit light to form a light path 22. The optical assembly 1 is used to convert the light emitted by the light source 21. The light emitted by the light source 21 hits the color wheel 10. The color wheel 10 rotates to achieve a picture output.

The embodiments shown and described above are only examples. Therefore, many commonly-known features and details are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims. It will therefore be appreciated that the embodiments described above may be modified within the scope of the claims.

## Claims

1. An optical assembly (1) configured for converting light defined by a light path (22), the optical assembly (1) comprising:
a color wheel (10) comprising at least two color circles (101), wherein the at least two color circles (101) are arranged concentrically and each comprises a plurality of color zones (102);
a first drive assembly (11) connected to the color wheel (10), wherein the first drive assembly (11) is configured for driving the color wheel (10) to rotate, and the plurality of color zones (102) of each of the at least two color circles (101) are illuminated by the light in the light path (22);
a second drive assembly (12) connected to the first drive assembly (11), wherein the second drive assembly (12) is configured for driving the color wheel (10) in a first direction (X), and each of the at least two color circles (101) is illuminated a light beam defined by the light path (22), the first direction (X) intersects with a directional extension of the light path (22).

2. The optical assembly (1) of claim 1, wherein the at least two color circles (101) are stacked on top of each other, centers (107) of circles of the plurality of color circles (101) overlap with a projection of a rotation plane (A) of the color wheel (10).

3. The optical assembly (1) of claim 2, wherein each of the at least two color circles (101) has a radius that is different from the other color circles (101), and the at least two color circles (101) are stacked on top of each other in an order from small to large or from large to small according to the radius.

4. The optical assembly (1) of claim 1, wherein each of the at least two color circles (101) is circular, and the at least two color circles (101) are provided in an order from small to large according to the radius, each of the at least two color circled (101) comprises a substrate (104) and a light conversion layer (105) arranged on the surface of the substrate (104), the light conversion layer (105) is configured to convert light.

5. The optical assembly (1) of claim 4, wherein the substrates (104) of adjacent two of the at least two color circles (101) are bonded together.

6. The optical assembly (1) of claim 4, wherein all the substrate (104) of the at least two color circles (101) are formed together as one piece.

7. The optical assembly (1) of claim 1, wherein the first direction (X) is perpendicular to the directional extension of the light path (22).

8. The optical assembly (1) of claim 1, wherein the first drive assembly (11) comprises a rotating drive member (111) and a rotational speed sensing member (112), the rotating drive member (111) comprises a fixed portion (113) and a rotating portion (114), the rotating portion (114) is rotatable relative to the fixed portion (113), the rotating portion (114) is coupled to the at least two color wheels (10) for driving the color wheel (10), the fixed portion (113) is coupled to the second drive assembly (12), the rotational speed sensing member (112) is connected to the fixed portion (113), a sensing end (115) of the rotational speed sensing member (112) faces the color wheel (10) and senses a rotational speed of the color wheel (10).

9. The optical assembly (1) of claim 1, wherein the second drive assembly (12) comprises a linear drive member (121) and an adapter plate (120), the adapter plate (120) is fixedly connected to the first drive assembly (11), the linear drive member (121) is connected to the adapter plate (120), the linear drive member (121) drives the color wheel (10) in a reciprocating linear motion in the first direction (X) through the adapter plate (120) and the first drive assembly (11).

10. The optical assembly (1) of claim 9, wherein the linear drive member (121) comprises a stepper motor (122), a drive screw (123), a transmission nut (124) and a transmission plate (125), the transmission plate (125) is fixedly connected to the adapter plate (120), the stepper motor (122) is connected to the drive screw (123), the transmission nut (124) is snapped on the drive screw (123) and connected to the drive screw (123), the transmission nut (124) is fixed to the transmission plate (125), the stepper motor (122) is configured for driving the drive screw (123) to rotate, so that the transmission nut (124) drives the transmission plate (125) to make linear motions relative to the stepper motor (122).

11. The optical assembly (1) of claim 10, wherein the second drive assembly (12) further comprises a guide rod (126) and a base (127), the stepper motor (122) is fixedly connected to the base (127), the guide rod (126) is fixedly connected to the base (127), the guide rod (126) is slidingly connected to the transmission plate (125) for guiding the transmission plate (125).

12. The optical assembly (1) of claim 11, wherein the transmission plate (125) comprises a first sub plate (1251) and a second sub plate (1252) at intervals, the first sub plate (1251) is fixed to the transmission nut (124), the first sub plate (1251) slidingly is connected to the guide rod (126), the second sub plate (1252) is slidingly connected to the guide rod (126), the first sub plate (1251) and the second sub plate (1252) are fixed to the adapter plate (120) away from the color wheel (10) side.

13. The optical assembly (1) of claim 10, wherein the second drive assembly (12) further comprises a linear displacement sensing member (129) and a measuring nut (128), the measuring nut (128) and the drive screw (123) are arranged at intervals, the measuring nut (128) and the transmission nut (124) are moved synchronously with respect to the drive screw (123), the linear displacement sensing member (129) is cooperated with the measuring nut (128) for obtaining the displacement of the transmission nut (124) along the first direction (X) by sensing the displacement of the measuring nut (128) along the first direction (X).

14. The optical assembly (1) of claim 9, wherein the second drive assembly (12) further comprises a buffer member (130), the buffer member (130) is positioned between the adapter plate (120) and the first drive assembly (11).

15. A projection device (2) comprising a light source (21) and the optical assembly (1) of claim 1 to 14, the light source (21) emitting light beams in a light path (22), the optical assembly (1) being configured for cooperating with the light path (22) for converting the light beam.
